Europäisches Patentamt

European Patent Office

Office européen des brevets

(11) Veröffentlichungsnummer: **0 215 498 B1**

# EUROPÄISCHE PATENTSCHRIFT

(12)

(45) Veröffentlichungstag der Patentschrift: **02.01.92**

(21) Anmeldenummer: **86201315.8**

(22) Anmeldetag: **24.07.86**

(51) Int. Cl.⁵: **G11B 7/08**

(54) **Optische Abtasteinheit.**

(30) Priorität: **14.08.85 DE 3529088**
**14.08.85 DE 3529089**
**25.11.85 NL 8503237**

(43) Veröffentlichungstag der Anmeldung:
**25.03.87 Patentblatt 87/13**

(45) Bekanntmachung des Hinweises auf die
Patenterteilung:
**02.01.92 Patentblatt 92/01**

(84) Benannte Vertragsstaaten:
**DE FR GB IT NL**

(56) Entgegenhaltungen:
**EP-A- 0 012 650          EP-A- 0 103 929**
**EP-A- 0 133 994          EP-A- 0 143 483**
**EP-A- 0 178 719          FR-A- 2 521 377**

**PATENTS ABSTRACTS OF JAPAN, Band 7,
Nr. 150 (P-207)[1295], 30. Juni 1983; & JP-A-58
60 434 (NIHON ITA GLASS K.K.) 09-04-1983**

**PATENTS ABSTRACTS OF JAPAN, Band 6,
Nr. 152 (P-134)[1030], 12. August 1982; & JP-
A-57 71 529 (TOKYO DENKI KAGAKU KOGYO
K.K.) 04-05-1982**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

Patentinhaber: **N.V. Philips' Gloeilampenfabrieken
Groenewoudseweg 1
NL-5621 BA Eindhoven(NL)**

(84) Benannte Vertragsstaaten:
**FR GB IT NL**

(72) Erfinder: **Meyer, Karl-Hanns, Dr.
Nerscheider Weg 34
W-5100 Aachen(DE)**
Erfinder: **Honds, Leo
Flandrische Strasse 50
W-5100 Aachen(DE)**
Erfinder: **Gijzen, Wilhelm Adrianus Henricus
Groenewoudseweg 1
NL-5621 BA Eindhoven(NL)**

Rank Xerox (UK) Business Services

PATENTS ABSTRACTS OF JAPAN, Band 8, Nr. 269 (P-319)[1706], 8. Dezember 1984; & JP-A-59 135 635 (MATSUSHITA DENKI SAN-GYO K.K.) 03-08-1984

PATENTS ABSTRACTS OF JAPAN, Band 9, Nr. 312 (P-411) [2035], 7. Dezember 1985; & JP-A-60 140 548 (TOSHIBA K.K.) 25-07-1985 (Kat. A)

PATENTS ABSTRACTS OF JAPAN, Band 8, Nr. 86 (P-269) [1523], 19. April 1984; & JP-A-59 2238 (FUJITSU K.K.) 07-01-1984

PATENTS ABSTRACTS OF JAPAN, Band 9, Nr. 227 (P-338)[1950], 13. September 1985; & JP-A-60 85 446 (ASAHI KOUGAKU KOGYO K.K.) 14-05-1985 (Kat. A)

PATENTS ABSTRACTS OF JAPAN, Band 8, Nr. 282 (P-323)[1719], 22. Dezember 1984; & JP-A-59 148 152 (SEIKO DENSHI KOGYO K.K.) 24-08-1984

Erfinder: **van Sluys, Robert Nestor Joseph** c/o Int.Octrooibureau B.V. Prof.Holstlaan 6 NL-5656 AA Eindhoven(NL)
Erfinder: **van Rosmalen, Gerard Eduard Groenewoudseweg 1 NL-5621 BA Eindhoven(NL)**

(74) Vertreter: **Kupfermann, Fritz-Joachim, Dipl.-Ing. et al Philips Patentverwaltung GmbH Wendenstrasse 35 Postfach 10 51 49 W-2000 Hamburg 1(DE)**

## Beschreibung

Die Erfindung bezieht sich auf eine optische Abtasteinheit zum Steuern und Richten eines Strahlungsbündels auf Aufzeichnungsspuren einer abzutastenden Oberfläche eines Informationsträgers, wobei die Abtasteinheit ein Objektiv mit einer optischen Achse aufweist, das mit einer Objektivlinse zum Fokussieren des Strahlungsbündels zu einem Abtastfleck auf der genannten Oberfläche versehen ist, wobei die Abtasteinheit weiterhin eine elektromagnetische Antriebsvorrichtung zum ständigen Korrigieren der Lage des Objektivs gegenüber dem Informationsträger aufweist, wobei die Antriebsvorrichtung mit einer Objektivhalterung für das Objektiv versehen ist, wobei diese Objektivhalterung einen koaxial zu der optischen Achse angeordneten, beweglichen ringförmigen Magnetkörper aus dauermagnetischem Material aufweist, der mit Magnetpolen versehen ist, und wobei die Antriebsvorrichtung weiterhin mit ortsfesten Spulen versehen ist, die im Bereich der axialen Enden des in der Mittellage befindlichen Magnetkörpers in äußeren Radialebenen liegen und die über einen Luftspalt mit dem genannten Magnetkörper magnetisch zusammenarbeiten.

Eine derartige optische Abtasteinheit ist aus der EP-A 103 929 bekannt. Bei dieser bekannten Abtasteinheit ist das Objektiv in einer beweglichen, axial dauermagnetisierten Hülse mit zwei als magnetische Pole ausgebildeten axialen Enden befestigt. Die ortsfest angeordneten Spulen der Antriebsvorrichtung sind Segmentspulen und sind in zwei Sätzen zu je drei oder vier Spulen verteilt, wobei sich in der Nähe jedes der zwei Enden der Hülse ein Spulensatz befindet. Die einzelnen Segmentspulen sind als flache Spulen ausgebildet mit zwei zueinander und zu der genannten Hülse sich koaxial erstreckenden Spulenteilen, wobei bei Stromdurchgang durch die Spulenteile der Strom in dem Spulenteil, der weiter von der Hülse entfernt liegt, dem Strom durch den näher bei der Hülse liegenden Spulenteil entgegengesetzt ist. Mit der bekannten Anordnung der Spulen lassen sich drei entsprechend den drei Koordinatenachsen eines orthogonalen Achsensystems gerichtete Kräfte sowie zwei um zwei der genannten Koordinatenachsen wirksame Drehmomente erzeugen.

Mit Hilfe der Antriebsvorrichtung der bekannten Abtasteinheit sind im Grunde alle erwünschten Bewegungen des Objektivs verwirklichbar. Diese Bewegungen umfassen eine axiale Bewegung, die parallel zu der optischen Achse des Objektivs gerichtet ist und zum zu einem Lichtfleck Fokussieren eines Lichtbündels in einer Informationsfläche einer sich drehenden optischen Platte dient, sowie zwei senkrecht aufeinander stehende radiale Bewegungen und/oder zwei Kippbewegungen um zwei senkrecht zueinander und zu der optischen Achse gerichtete Achsen, wobei die letztgenannten vier Bewegungen zur radialen und tangentiellen Spurfolge des Lichtflecks dienen.

Die bekannte Antgriebseinheit weist jedoch den Nachteil auf, daß die magnetischen Kräfte zwischen den Spulen und der magnetischen Hülse als Funktion der axialen Verschiebung des Objektivs derart schwanken, daß bereits bei einer geringen axialen Verschiebung des Objektivs aus der Mitte zwischen den Spulensätzen liegenden Mittellage die Antriebsvorrichtung nicht mehr imstande ist, das Objektiv noch einwandfrei zu verschieben, um die erforderliche Fokussierung des Lichtbündels sowie die erforderliche Spurfolge des Lichtflecks zu verwirklichen. Die weit auseinander angeordneten Spulensätze eignen sich zwar dazu, über einen ausreichenden Abstand an der optischen Achse entlang zu bewegen, dabei nimmt aber die Möglichkeit, die anderen genannten Bewegungen zu erzeugen, so schnell ab, daß das Objekttiv bereits in einem geringen Abstand von der Mittellage nicht mehr ausreichend angetrieben wird, um die Spurfolge des Lichtflecks gewährleisten zu können.

Die Erfindung hat nun zur Aufgabe, eine optische Abtasteinheit der eingangs erwähnten Art zu schaffen, die derart mit Spulen versehen ist, daß die zur Fokussierbewegungen erforderlichen Kräfte sowie die zur Spurfolge erforderlichen Kräfte beim über einen größeren Abstand Verschieben des Objektivs konstant oder nahezu kontant bleiben.

Eine erste Ausführungsform der optischen Abtasteinheit bei der der Magnetkörper an seinen axialen Enden mit Magnetpolen versehen ist, und bei der Antriebsvorrichtung weiterhin mit ortsfesten Segmentspulen versehen ist, wovon jeweils mindestens drei im Bereich der axialen Enden des in der Mittellage befindlichen Magnetkörpers in äußeren Radialebenen liegen und die mittels eines aktiven, dem Magnetkörper zugewandten Teils über einen Luftspalt mit dem genannten Magnetkörper magnetisch zusammenarbeiten, weist dazu das Kennzeichen auf, daß zunächst in wenigstens einer mittleren Radialebene mindestens drei Segmentspulen angeordnet sind, die aus je einem dem Magnetkörper zugewandten, in der Umfangsrichtung des Magnetkörpers sich erstreckenden aktiven Spulenteil und einem weiter von dem Magnetkörper abliegenden Spulenteil bestehen, wobei die Segmentspulen, in der Umfangsrichtung des Magnetkörpers gesehen, aneinander anschließen, so daß eine im wesentlichen radiale Bewegung bewirkbar ist.

Bei einer derartigen optischen Abtasteinheit bleiben die zur Fokussierbewegung erforderlichen Kräfte sowie die zur Spurfolge erforderlichen Kräfte beim über einen größeren Abstand Verschieben des Objektivs konstant oder nahezu konstant.

Die beschriebene erfindungsgemäße Spulenkonfiguratin ermöglicht es, die Spulen in der Mittelebene zum Verschieben des Objektivs in Richtung quer zu der optischen Achse zu verwenden und die Spulen in den beiden äußeren Radialebenen zum Verschieben längs der optischen Achse des Objektivs zu benutzen, wobei die letztgenannten Spulen gegebenenfalls noch zum Kippen des Objektivs um eine quer zu der optischen Achse stehende Achse verwendbar sind. Die obenstehenden Möglichkeiten lassen sich mit einem Magnetkörper verwirklichen, der auf einfache Weise axial magnetisiert ist.

Die erfindungsgemäße Abtasteinheit weist den Vorteil auf, daß bei Erregung der Spulen die axial sowie die radial gerichteten Kräfte, welche die Spulen auf den Magnetkörper ausüben, bei Verschiebung des Objektivs über einen Abstand, der weitgehend ausreicht zum Fokussieren und zum fokussiert Halten eines Lichtflecks auf die Informationsebene einer optischen Platte wenigstens nahezu kosntant bleiben. Dabei tritt der hinzukommende Vorteil auf, daß die günstige erfindungsgemäße Spulenkonfiguration es ermöglicht, die Spulen in den Randzonen als flache Spulen auszubilden, wodurch die Bauhöhe der Abtasteinheit und die axiale Abmessung des Magnetkörpers und daher der Objektivhalterung klein gehalten werden können. Dadurch ist es durchaus möglich, den Schwerpunkt der Objektivhalterung in den Schwerpunkt der Objektivlinse zu legen. Dies bietet den zusätzlichen Vorteil, daß bei Ansteuerung der Spulen in der Mittelzone, wobei radial gerichtete Kräfte auf die Objektivhalterung mit dem Objektiv ausgeübt werden, keine unkontrollierbaren Momente entstehen, die zu einer Kippung des Objektivs und folglich zu Antriebsübersprechen führen können.

Die Segmentspulen in den äußeren Radialebenen werden dabei im wesentlichen zur axialen Verschiebung des Objektivs verwendet. Durch selektive Ansteuerung der Segmentspulen in den äußeren Radialebenen ist es jedoch auch möglich, auf den Magnetkörper Momente auszuüben, mittels der das Objektiv durch Kippen des Magnetkörpers geringe Drehbewegungen um senkrecht auf der optischen Achse stehende Achsen durchführen kann. Die in der/den mittleren Radialebene(n) befindlichen Segmentspulen können bei selektiver Ansteuerung des Objektivs in radialer Richtung verschieben. Dies bedeutet, daß bei dieser Ausführungsform nur die Spulen in den äußeren Radialebenen zum Fokussieren eines Lichtbündels zu einem Lichtfleck verwendet werden und daß die Spulen in der/den mittleren Ebene(n) gegebenenfalls in Kombination mit den Spulen in den äußeren Radialebenen zum Ausrichten des Objektivs zum Folgen der Aufzeichnungsspur einer abzutastenden optischen Platte verwendet werden.

Zum Erzeugen einer konstanten, axial gerichteten Hubkraft auf das Objektiv ist ein gewisser minimaler Abstand zwischen den zu Spulensätzen zusammengefaßten Segmentspulen der beiden äußeren Radialebenen erforderlich. Eine mögliche Ausführungsform, bei der der zwischen den genannten Segmentspulensätzen liegende Raum auf wirtschaftliche Weise benutzt wird, weist das Kennzeichen auf, daß die axiale Abmessung der Segmentspulen in der mittleren Radialebene größer ist als die axiale Abmessung der Segmentspulen in den Randzonen.

Mit einer derartigen Spulenkonfiguration lassen sich große und konstante, axial und radial gerichtete Kräfte auf das Objektiv ausüben, wodurch schnelle Verschiebungen des Objektivs möglich sind. Weiterhin bietet dies den Vorteil, daß die große Anzahl von Spulen in der/den mittleren Radialebene(n) mehr Regel- und Einstellmöglichkeiten bietet, wodurch die Empfindlichkeit des Servosystems, in das die Abtasteinheit aufgenommen ist, verbessert werden kann.

Eine zweite Ausführungsform, wobei der Magnetkörper an seinen axialen Enden mit Magnetpolen versehen ist, ist dadurch gekennzeichnet, daß die Spulen in jeder der äußeren Radialebenen als sich koaxial um den genannten Magnetkörper erstreckende Ringspule ausgebildet ist, so daß eine axiale Bewegung bewirkbar ist, und daß in wenigstens einer mittleren Radialebene mindestens drei Segmentspulen vorhanden sind, wobei die Segmentspulen, in der Umfangsrichtung des Magnetkörpers gesehen, aneinander anschließen und mit jeweils einem aktiven Teil in dieser Radialebene derart wirksam sind, daß eine im wesentlichen radiale Bewegung bewirkbar ist.

Diese Ausführungsform bietet den Vorteil, daß mit den Ringspulen, die nur zum axialen Verschieben des Objektivs zum Fokussieren dienen, ein axialer Antrieb mit sehr hohem Wirkungsgrad erreichbar ist, weil die Ringspulen sich völlig in günstigen Gebieten des Magnetfeldes des Magnetkörpers befinden können.

Weil die Ringspulen auf den Magnetkörper kein Drehmoment ausüben können, müssen die Spulen in der mittleren Radialebene die Spurfolge sowie die Winkelkorrekturen wegen einer etwaigen Schieflage des Informationsträgers versorgen können. Eine dazu geeignete Ausführungsform weist das Kennzeichen auf, daß die genannten Segmentspulen aus je einem gegenüber dem Magnetkörper liegenden, in der Umfangsrichtung des Magnetkörpers sich erstreckenden aktiven Spulenteil und einem weiter von dem Magnetkörper abliegenden Spulenteil bestehen. Diese Ausführungsform weist eine besonders einfache Konstruktion auf und erfordert zugleich nur ein einfaches Steuersystem zur Ansteuerung der Segmentspulen; bei Verwendung von drei Segmentspulen sind nur fünf Verstärker notwendig. Eine weitere mögliche Ausführungsform, die in konstruktiver Hinsicht etwas verwickelter ist, mit der jedoch ein radialer Antrieb mit hohem Wirkungsgrad erzielbar ist, weist das Kennzeichen auf, daß die Segmentspulen als Spulensätze gebildet sind, wobei die Sätze, in axialer Richtung des Magnetkörpers gesehen, nebeneinander liegen und daß die einzelnen Spulen der Spulensätze je zwei parallele, in Umfangsrichtung des Magnetkörpers erstreckende aktive Spulenteile aufweisen, wobei einer dieser aktiven Spulenteile radial neben dem Magnetkörper liegt und durch zu dem Magnetkörper hin abgewinkelte weitere Spulenteile mit einem anderen aktiven Spulenteil verbunden ist, wobei dieser sich gegenüber der Stirnseite des ihm zugeordneten Magnetpols des Magnetkörpers befindet.

Besonders günstig ist es dabei, wenn die genannten Ringspulen eine Anzahl von nach außen vorstehenden Vorsprüngen aufweisen, durch welche sich die weiteren Spulenteile der Segmentspulen erstrecken. Die in dieser Ausführungsform vorhandenen Segmentspulen sind derart gebildet und gegenüber der Objektivhalterung ausgerichtet, daß weitaus der größte Teil der Segmentspulen in günstigen Gebieten des Magnetfeldes angeordnet werden kann.

Bei einer dritten Ausführungsform, bei der in den äußeren Radialebenen jeweils mindestens drei Segmentspulen angeordnet sind, die Mittels einer aktiven dem Magnetkörper zugewandten Teils mit dem Magnetkörper magnetisch zusammen arbeiten, und bei der Magnetkörper us zwei einander entgegen magnetisierten, axial aufeinander gesetzten Ringteilen besteht, ist vorgesehen, daß der ringförmige Magnetkörper in wenigstens einer mittleren Radialebene von einer Ringspule umschlossen ist.

Durch das Einführen der Ringspule in der mittleren Radialebene ist es möglich, das in diesem Bereich radiale Magnetfeld zur Erzeugung axialer, der Fokussierung dienen-der Kräfte auszunutzen. Es läßt sich damit dieser optischen Abtasteinheit auf einfache Weise eine gewisse Trennung zwischen der Spulenansteuerung für axiale und radiale Kräfte herbeiführen.

Aufgrund der Segmentspulenanordnung im Bereich der äußeren Radialebenen liegen die Angriffspunkte der Kraftvektoren in axialer Richtung außerhalb des Schwerpunktes des Magnetkörpers. Damit ist es möglich, das Objektiv so zu steuern, daß es außer drei translatorischen Bewegungen in den schon genannten drei Koordinatenachsen auch zwei Drehbewegungen um zwei dieser Koordinatenachsen ausführt.

In weiterer Ausgestaltung der Erfindung ist vorgesehen, daß der Magnetkörper aus zwei Teilringen besteht, zwischen die ein Zwischenring gefügt ist. Der Zwischenring kann dabei aus magnetisch weichem oder unmagnetischem Material bestehen. Die Trennung der Stellwirkungen läßt sich dadurch verbessern.

Nach einer weiteren Ausgestaltung der Erfindung ist vorgesehen, daß der Zwischenring aus dauermagnetischem Material besteht und radial magnetisiert ist. Die steuernde Einwirkung der Spulenfelder wird dadurch erhöht.

Nach einer anderen weiteren Ausgestaltung der Erfindung ist vorgesehen, daß der Magnetkörper insgesamt derart magnetisiert ist, daß die Nordpole der Teilringe an dem Zwischenring und die Nordpole des Zwischenringes an deren Außenwand vorgesehen sind.

Auch kann die Erfindung dadurch gekennzeichnet sein, daß der Magnetkörper insgesamt derart magnetisiert ist, daß die Nordpole der Teilringe an den äußeren axialen Enden und die Nordpole der Zwischenringe an deren Innenwand vorgesehen sind. Auf diese Weise kann man gewünschte Eigenschaften des Systems verbessern und parasitäre Eigenschaften reduzieren.

Nach einer anderen Ausgestaltung der Erfindung ist vorgesehen, daß die Spulen in den einzelnen Radialebenen als flächenhafte Leitungszüge auf Schaltungsplatten angeordnet sind. Der technische Aufbau wird dadurch wesentlich vereinfacht.

Nach einer weiteren günstigen Ausgestaltung der Efindung ist vorgesehen, daß der Magnetkörper aus zwei Teilringen besteht, die in entgegengesetzten Richtungen radial magnetisiert sind. Damit lassen sich die Magnetfeldbereiche mit vorwiegend radialer Komponente gegenüber denen mit vorwiegend axialer Komponente verstärken. Dabei kann es günstig sein, daß zwischen den Teilringen ein Zwischenring angeordnet ist, der axial magnetisiert ist. Die axialen und radialen Magnetfeldbereiche lassen sich auf diese Weise deutlicher trennen; die parasitären Kräfte und Drehmomente lassen sich dadurch besser beherrschen.

Ausführungsbeispiele der Erfindung sind in der Zeichnung dargestellt und werden im folgenden näher beschrieben. Es zeigen:

Fig. 1 eine schematische Darstellung eines Teils der erfindungsgemässen Abtasteinheit,

Fig. 2 eine explodierte Ansicht einer ersten Ausführungsform der erfindungsgemässen Antriebsvorrichtung,

Fig. 3 eine Draufsicht der in Fig. 2 dargestellten Antriebsvorrichtung,

Fig. 4 einen Schnitt gemäss der Linie IV-IV in Fig. 2,

Fig. 5 eine explodierte Ansicht einer zweiten Ausführungsform der Antriebsvorrichtung der Abtasteinheit nach der Erfindung,

Fig. 6 eine explodierte Ansicht einer dritten Ausführungsform der Antriebseinheit der erfindungsgemässen Abtasteinheit,

Fig. 7 einen Längsschnitt der in Fig. 6 dargestellten Antriebsvorrichtung,

Fig. 8 eine explodierte Ansicht einer vierten Ausführungsform der Abtastvorrichtung der erfindungsgemässen Abtasteinheit,

Fig. 9 einen Längsschnitt durch die in Fig. 8 dargestellte Antriebsvorrichtung,

Fig. 10 einen Schnitt durch eine weitere Ausführungsform von der optische Abtasteinheit gemäß der Erfindung.

Fig. 11 eine andere Darstellung der optischen Abtasteinheit nach Fig. 10 ebenfalls im Schnitt.

Fig. 12 eine Draufsicht auf einen Spulensatz aus vier Segmentspulen nach den Fig. 10 und 11,

Fig. 13 eine schaubildliche Darstellung der optischen Abtasteinheit nach den Fig. 10 bis 12,

Fig. 14 einen abgewandelten Aufbau des Magnetkörpers,

Fig. 15 einen weiteren abgewandelten Aufbau des Magnetkörpers,

Fig. 16 und 17 die optische Abtasteinheit mit weiteren Varianten des Magnetkörpers.

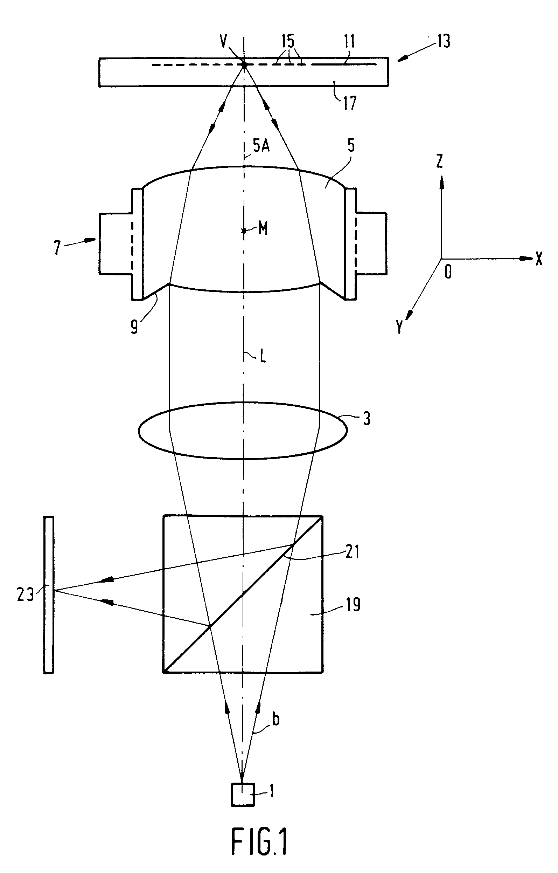

Die Abtasteinheit nach Fig. 1 ist mit einer Strahlungsquelle 1, beispielsweise einem Diodenlaser, einer Kollimatorlinse 3 und einem Objektiv 5 mit einer optischen Achse 5A versehen, wobei das Objektiv in einer Objektivhalterung 7 einer noch näher zu beschreibenden elektromagnetischen Antriebsvorrichtung angeordnet ist. Die Kollimatorlinse 3 sowie das Objektiv 5 können mehrere Linsenelemente aufweisen, bestehen aber vorzugsweise aus einem einzigen Linsenelement mit mindestens einer asphärisch brechenden Oberfläche. In dieser Vesuchsanordnung besteht das Objektiv aus nur einer Objektivlinse, die entsprechend einem Replika-Verfahren hergestellt wurde, wobei die Objektivlinse mit einem ringförmigen Spiegel 9 zwecks eines an dieser Stelle nicht näher beschriebenen Lagendetektionssystems. Ein derartiges Lagendetektionssystem ist in der niederländischen Patentanmeldung 8501665 (PHN 11.416; hiermit durch Bezeichnung einbegriffen) beschrieben.

Das von der Strahlungsquelle 1 gelieferte divergierende Strahlungsbündel b wird von der Kollimatorlinse 3 zu einem parallelen Bündel umgewandelt, das die Öffnung des Objektivs 5 auf einwandfreie Weise füllt. Das Objektiv fokussiert das Strahlungsbündel zu einem biegungsbegrenzten Strahlungsfleck V mit einem Durchmesser von beispielsweise 1 μm in der Informationfläche 11 eines scheibenförmigen Informationsträgers 13, von dem in Fig. 1 ein kleiner Teil in radialem Schnitt dargestellt ist. Die Information ist in konzentrischen Spuren 15 oder quasi-konzentrischen Spuren, die zusammen eine spiralförmige Spur bilden, gegliedert. Die Information besteht aus einer Vielzahl optisch detektierbaren Informationsgebieten, zwischen denen Zwischengebiete liegen. Vorzugsweise befindet sich die Informationsfläche 11 in der Nähe der Oberseite des Informationsträgers 13, so daß das Bündel b durch das durchsichtige Substrat 17 des Informationsträgers geht, bevor es die Informationsfläche erreicht. Die Informationsfläche ist vorzugsweise strahlungsreflektierend, so daß das Bündel in der Richtung der Strahlungsquelle reflektiert wird.

Bei drehendem Informationsträger ist das von der Informationsfläche reflektierte Bündel in der Zeit moduliert und zwar entsprechend der Folge von Informationsgebieten und Zwischengebieten in der auszulesenden Spur. Um das modulierte Bündel von dem von der Strahlungsquelle ausgestrahlten Bündel zu trennen ist in dem Strahlungsweg ein Auskoppelement 19 in Form beispielsweise eines Teilprismas vorgesehen, dessen Trennfläche 21 mindestens einen Teil des zurückgeworfenen Bündels zu dem strahlungsempfindlichen Detektor 23 reflektiert. Der Detektor 23 verwandelt das modulierte Bündel in ein elektrisches Signal, das auf bekannte Weise zu einem Signal verabeitet wird, das, abhängig von der Art der Information, die in dem Informationsträger gespeichert ist, dazu geeignet ist, sichtbar oder hörbar gemacht oder aber auf eine andere Art und Weise verarbeitet zu werden.

In dem rechten Teil der Fig. 1 ist ein orthogonales Achsensystem XYZ angegeben, dessen Ursprung O als im Punkt M gedacht werden muss, so daß die Z-achse mit dem Hauptstrahl L des Bündels b zusammenfällt. Die Z-Achse erstreckt sich in axialer Richtung, wobei dies die Richtung ist, in der das Objektiv muss verschoben werden können um das Bündel b zu dem Lichtflecken V zu fokussieren. Die X-Achse und die Y-Achse erstrecken sich in radialer Richtung bzw. in tangentieller Richtung gegenüber der Drehungsachse des Informationsträgers. Weil der Lichtflecken V den Spuren der sich drehenden Informationsplatte möglichst gut folgen soll, ist es notwendig, daß das Objektiv 5 geradlinige Bewegungen entsprechend der X-Achse und der Y-Achse, sowie etwaige Drehungen um diese Achsen durchführen kann. Die Bewegung des Objektivs gemäss der Z-Achse wird auch als Fokussierbewegung bezeichnet, während die übrigen Bewegungen auch als Spurfolge- und Zeitfehlerkorrigerbewegungen bezeichnet werden.

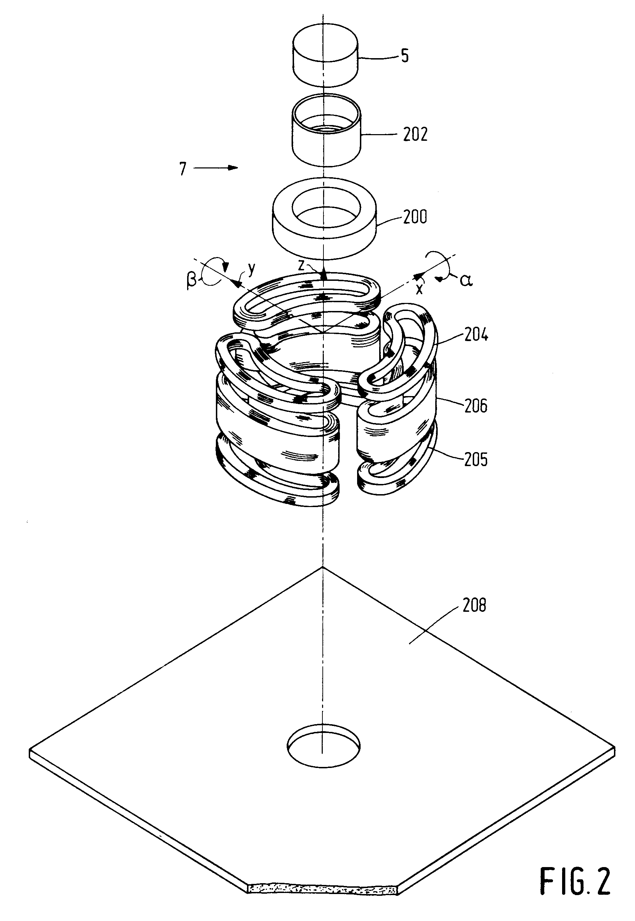

In den Fig. 2 bis 7 werden einige mögliche elektromagnetische Antriebsvorrichtungen der erfindungsgemässen Abtasteinheit näher beschreiben. Die Antriebsvorrichtungen bestehen im Grunde aus je einem beweglich aufgehängten ringförmigen Magnetkörper und aus einer Anzahl um denselben gegliederten ortsfesten Spulen, die entsprechend drei sich parallel erstreckenden radialen Zonen gegliedert sind. Der Magnetkörper ist ring- oder hülsenförmig und aus einem dauermagnetischen Werkstoff hergestellt. Vorzugsweise werden Magnetwerkstoffe mit einem hohen Energieinhalt wie Neodymium-Eisen-Bor und Samarium-Kobalt verwendet. Die Spulen in den betreffenden Zonen befinden sich in spezifischen Teilen des magnetischen Kraftfeldes des Magnetkörpers. Damit das Objektiv die bereits obenstehend beschriebenen gewünschten Bewegungen ohne parasitäre Resonanzen durchführen kann, ist das Objektiv in der genannten Antriebsvorrichtung magnetisch gelagert, wobei das Objektiv und die Objektivhalterung einerseits und die überigen Elemente der Abtasteinheit andererseits keinen körperlichen Kontakt haben.

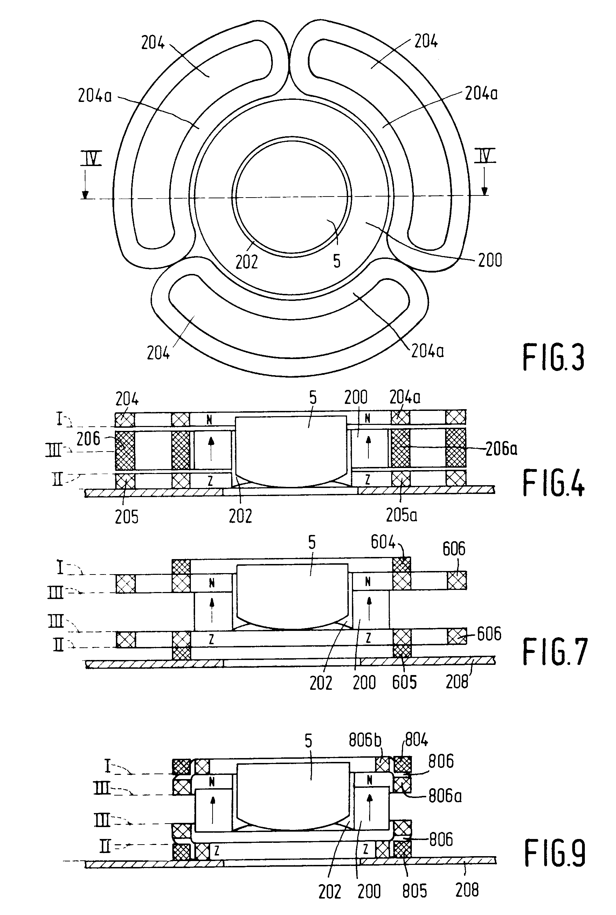

Die Fig. 2, 3 und 4 zeigen eine Antriebsvorrichtung mit einem Magnetkörper 200, der axial magnetisiert ist, wie durch Pfeile in Fig. 4 angegeben ist, wodurch an den axialen Enden des Magnetkörpers 200 ein Südpol Z bzw. ein Nordpol N gebildet ist. Der Magnetkörper 200 bildet zusammen mit einem Fassungsring 202 die Objektivhalterung 7 für das Objektiv 5. Koaxial um den Magnetkörper 200 sind drei Spulensätze 204, 205 und 206 auf einer Gestellplatte 208 befestigt. Jeder der Sätze 204, 205 und 206 weist mindestens drei bananenförmiggebogene Segmentspulen auf. Die Sätze 204, 205 und 206 sind entsprechend drei axial verschobenen, gegenüber dem Magnetkörper 200 sich radial erstreckenden Radialebenen und zwar zwei äusseren Radialebenen und II und einer zwischen denselben liegenden mittleren Radialebene III gegliedert. In Fig. 4 sind die genannten Ebenen angegeben, ebenso wie das Objektiv 5. Das Objektiv 5, das gegenüber den Spulensätzen längs der Z-Achse axial verschiebbar ist, ist in Fig. 4 in der Mittellager dargestellt, mit der die Lage gemeint ist, von woraus das Objektiv ebensoweit aufwärts wie abwärts verschoben werden kann. In der genannten Mittellage des Objektivs 5 befinden sich die äusseren Radialebenen I und II gegenüber den Magnetpolen N bzw. Z des Magnetkörpers 200. Die Anzahl Segmentspulen in jedem der Sätze 204, 205 und 206 ist nicht auf drei beschränkt; vier oder sogar mehr als vier Spulen sind ebenfalls möglich.

Vorzugsweise haben die Segmentspulen des Satzes 206 in der mittleren Radialebene III eine grössere axiale Abmessung als die Segmentsulen der Sätze 204 und 205. Die Segmentspulen der Sätze 204, 205 und 206 befinden sich je in einem aktiven Spulenteil 204a, 205a bzw. 206a, d.h. der dem Magnetkörper 200 am nächsten liegende Spulenteil, in einem günstigen Teil des Magnetfeldes des Magnetkörpers 200. So erstrecken sich die Feldlinien des genannten Magnetfeldes im wesentlichen in radialer Richtung an der Stelle des aktiven Spulenteils 204a und 205a der Spulen des Satzes 204 bzw. 205 in der Ebene I bzw. II, wodurch die gesamten Spulen in den Ebenen I und II bei Stromdurchgang axial gerichtete Kräfte auf den Magnetkroer ausüber können. Daher sind die Spulensätze 204 und 205 in den äusseren Radialebenen I und II durchaus dazu geeignet, die Fokussierbewegung des Objektivs 5 längs der Z-Achse zu erzeugen. Der aktive Spulenteil 206a der Spulen des Satzes 206 in der mittleren Radialebene III liegt dagegen in einem Teil des genannten Magnetfeldes, wo die Feldlinien sich im wesentlichen axial erstrecken. Bei Stromdurchgang durch diese Spulen werden folglich radial gerichtete Kräfte auf den Magnetkörper 200 augeübt werden. Zur geradlinigen Bewegung des Objektivs 5 and der X-Achse und der Y-Achse entlang zur Spurfolge und zur Zeitkorrektur können daher auf erfolgreiche Weise Segmentspulen des Satzes 206 in der Mittenzone III erregt werden. Werden die Segmentspulen der Sätze 204 und 205 in den äusseren Ebenen I und II unterschiedlich angesteuert, so können auf den Magnetkörper 200 auch noch Momente übertragen werden. Der Antrieb ist daduch auch dazu verwendbar, das Objektiv über einen beschränkten Winkel und um die X-Achse bzw. Y-Achse zu koppen, wodurch zusätzliche Spurfolge- und Zeitkorrekturbewegungen des Objektivs möglich sind.

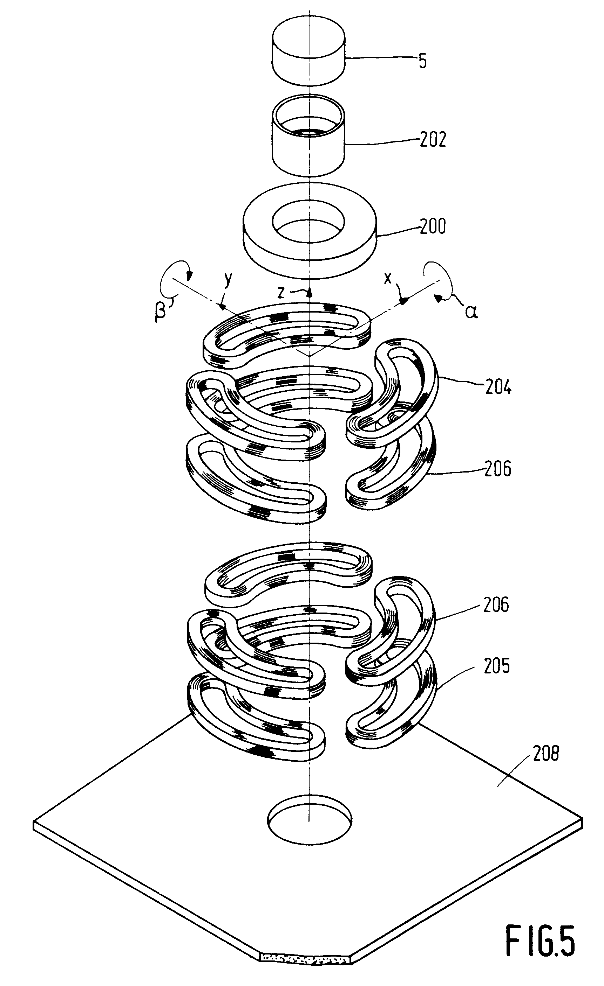

Die in Fig. 5 dargestellte Antriebsvorrichtung gleicht der obenstehend beschriebenen Antriebsvorrichtung weitgehend und wird daher nur beschränkt beschrieben. Die Antriebsvorrichtung ist wieder mit dem Magnetkörper 200 versehen, in dem die Fassung 202 mit dem Objektiv 5befestigt ist. Die Antriebsvorrichtung ist hier aber mit vier Sätzen von Segmentspulen versehen, die entsprechend vier Radialebenen gegliedert sind, wobei zwei Radialebenen den bereits genannten äusseren Radialebenen I und II entsprechen und wobei die anderen zwei Radialebenen der geannten mittleren Radialebene III entsprechen. In den äusseren Radialebenen I und II befinden sich auf die bereits beschreibene Art und Weise die Sätze 204 und 205. Der Unterschied mit der vorhergehenden Antriebsvorrichtung liegt in dem Aufbau der Spulensätze in den mittleren Radialebenen III, wobei jede der mittleren Radialebene aus einem Satz 206 von drei oder gegebenenfalls mehr Segmentspulen besteht. Zwischen den Sätzen 206 kann ein axiales Distanzteil vorgesehen sein.

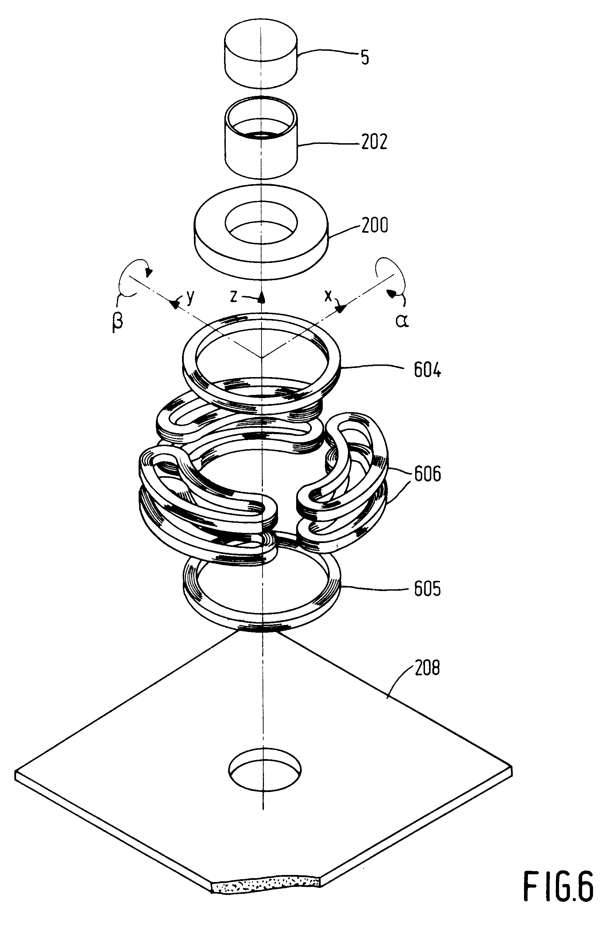

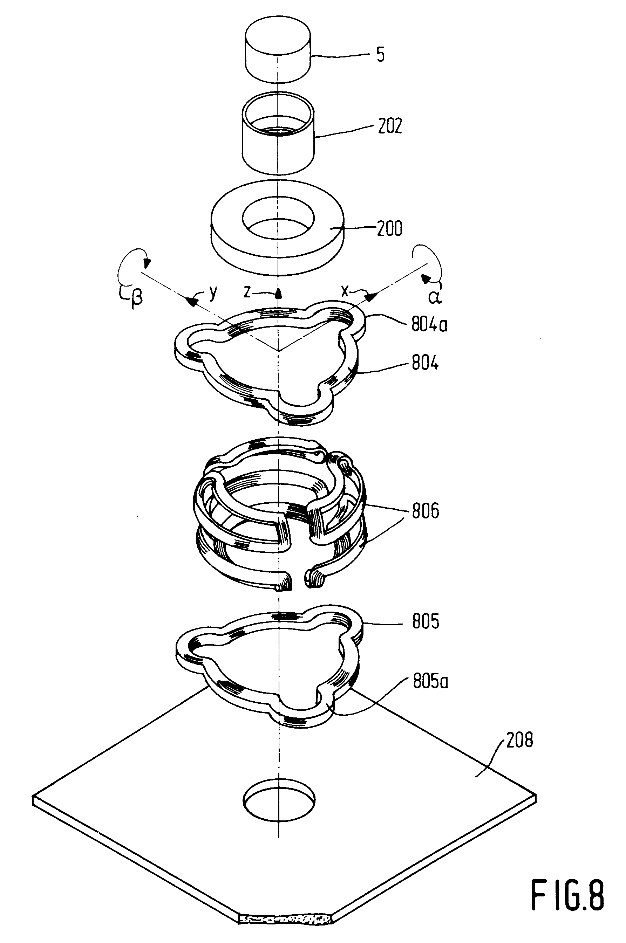

In den Fig. 6 und 7 ist eine elektromagnetische Antriebsvorrichtung nach der Erfindung dargestellt, bei der die Anordnung der Spulen in den äusseren Radialebenen von der in den vorhergehenden Ausführungsformen abweicht. Die Antriebsvorrichtung weist auch hier den axial magnetisierten beweglichen Magnetkörper 200 auf, an dem die Fassung 202 für das Objektiv 54 befestigt ist. Die ortsfesten Spulen sind, wie in jeder der Ausführungsformen, entsprechend drei parallelen sich quer zu der Z-Achse erstreckenden Radialebenen gegliedert. In jeder der äusseren Ebenen I und II ist eine koaxial um den Magnetkörper angeordnete Ringspule 604 angeordnet. Die Ringspulen 604 sind derart ausgerichtet, daß die Feldlinien des Magnetfeldes des Magnetkörpers 200 an der Stelle der Ringspulen 604 sich im wesentlichen radial erstrecken. Bei Erregung der Ringspulen werden dadurch axial gerichtete Kräfte auf den Magnetkörper 200 ausgeübt. Die Fokussiereinstellung des Objektivs 202 kann daher durch Ansteuerung der Ringspulen 604 durchgeführt werden. In der zwischen den Ringspulen 604 liegenden mittleren Radialebenen III sind in einem gewissen Abstand voneinder zwei bananenförmiggebogene Segmentspulensätze 606 angeordnet. Jeder Satz weist vorzugsweise drei oder vier Segmentspulen auf, die gruppenweise ringförmig unte Freilassung eines Luftspaltes sich um den Magnetkörper 200 erstrecken. Die Segmentspulen befinden sich in Gebieten des Magnetfeldes des Magnetkörpers 200, wo die Feldlinien sich mehr oder weniger axial erstrecken. Dies bedeutet, daß bei Erregung der Segmentspulen im wesentlichen radial gerichtete Kräfte auf den Magnetkörper ausgeübt werden. Die Segmentspulensätze 606 können daher geradlinige Bewegungendes Objektivs and er X-Achse und der Y-Achse entlang verursachen. Ausserdem sind durch selektive Ansteuerung der Segmentspulen Kuppungen des Objektivs durchführbar.

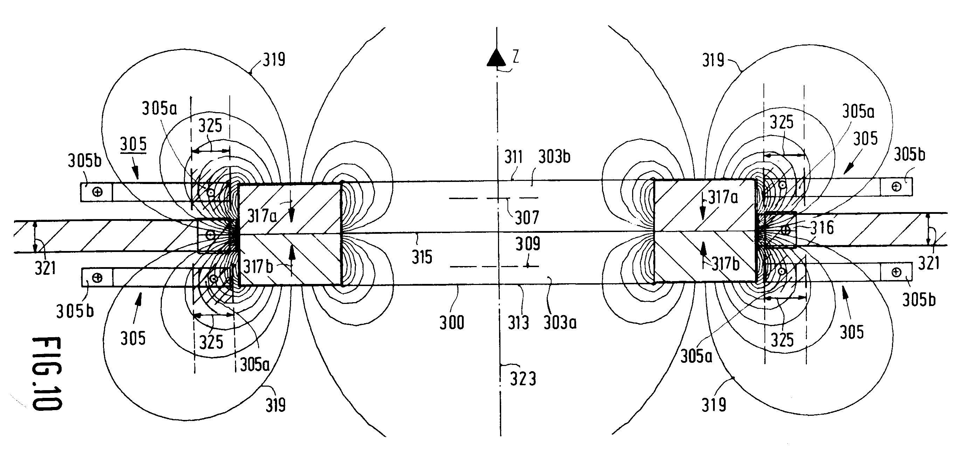

Eine wirtschaftlich äusserst interessante elektromagnetische Antriebsvorrichtung ist in den Fig. 8 und 9 dargestellt. Diese Antriebsvorrichtung entspricht was den beweglichen Teil anbelangt den bereits gezeigten Ausführungsformen, hat aber einen besonders gebildeten ortsfesten Teil. Auch in dieser Ausführungsform sind die Spulen wieder entsprechend drei sich parallel zueinander erstreckenden quer zu der Z-Achse gerichteten Radialebenen gegliedert, wobei in diesem Fall eine gewisse Überlappung der Spulen der äusseren Radialebenen I und II und der Spulen der mittleren Radialebenen III auftritt, wie dies in Fig. 9 dargestellt ist. In den beiden äusseren Radialebenen I und II befindet sich eine ringspule 804 bzw. 805a versehen ist.

An de Stelle der Ringspulen 804 und 805 erstrecken sich, ebenso wie in der vorhergehenden Ausführungsform, die Feldlinien des Magnetfeldes des axialmagnetisierten Magnetkörpers 200 im wesentichen radial, so daß diese Spulen auch hier dazu gemeint sind, das Objektiv längs der Z-Achse anzutreiben.

In den mittleren Radialebenen III sind in einem gewissen axialen Abstand voneinander zwei Sätze flügelförmiggebogener Segmentspulen 806 angeordnet. Jeder Satz besteht wieder aus vorzugsweise drei oder vier Spulen, wobei die gesamten Spulen einen mehr oder weniger geschlossenen Mantel um den Magnetkörper bilden. Durch die besondere Form der Segmentspulen 806 hat jede Spule zwei aktive Spulenteile 806a und 806b, die sich beide in dem genannten Magnetfeld erstrecken. Die Stelle der aktiven Spulenteile 806a und 806b ist dabei derart, daß an der Stelle dieser Spulenteile die Feldlinien im wesentlichen axial gerichtet sind. Diese Anordnung ermöglicht schnelle und sehr einwandfreie Spurfolge- und Zeitkorrekturbewegungen des Objektivs. Die zwischen den aktiven Spulenteilen 806a und 806b liegenden Spulenteile erstrecken sich die bereits genannten Vorsprünge 804a und 804b, wodurch eine gedrängte Konstruktion möglich ist.

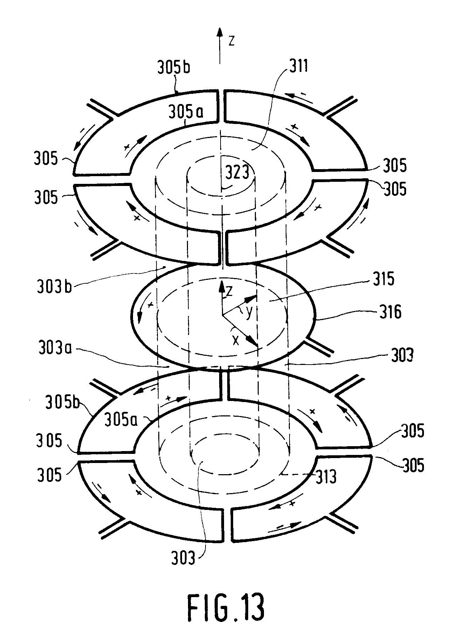

Die in Fig. 10 bis 13 schematisch dargestellte optische Abtasteinheit weist einen nur schematisch angedeuteten dauermagnetischen Magnetkörper 300 auf. Dieser ringförmigen Magnetkörper 300, der als Objektivhalterung dient, ist auf nicht näher beschriebene Weise in einem Spulensystem aufgehängt. Dieses Spulensystem besteht hier aus zwei Segmentspulensätzen 305, die in äusseren Radialebenen 307 und 309 im Bereich der axialen Enden 311, 313 des Magnetkörpers 309 angeordnet sind. Rings um der dauermagnetischen Körper 303 erstreckt sich in deren Mitte 315 eine Ringspule 316. Der Magnetkörper 303 ist in ihrem Mitte 15 unterteilt. Die beiden Teilringe 303a und 303b sind in entgegengesetzten Richtugngn axial magnetisiert. Dies ist durch die entgegengerichteten Pfeile 317a und 371b in Fig. 10 erkennbar gemacht.

Die in Fig. 10 dargestellten Feldlinien 319 zeigen, daß es im Bereich der Körpermitte 315 einen Feldlinienbereich 321 gibt, in dem die Feldlinien im wesentlichen radial zur Körper 323 verlaufen. In den Bereichen der Enden 311 und 313 gibt es demgegenüber Feldlinienbereiche 325, in denen die Feldlinien 325 einen überwiegend axialen Verlauf gegenüber der Körperachse 323 aufweisen. Diese Gebiete mit bevorzugtem Feldlinienverlauf werden nun von den einzelnen Spulenarten, nämlich den Segmentspulen 305 einerseits und der Ringspule 316 andererseits, über-wiegend getrennt angesteuert und zur Verstellung der Objektivhalterung bzw. des dauermagnetischen Körpers 303 ausgenutzt. Durch Erregen der Ringspule 316 kann der Magnetkörper 303 in axialer Richtung, die in der Zeichnung mit Z angegeben ist, verstellt werden. Beim Erregen der Segmentspulen 305 kann der Magnetkörper 303 in radialer Richtung, d.h. in der X- und Y-Richtung nach Fig. 12 verstellt werden.

Fig. 12 zeigt in Draufsicht einen Spulensatz aus vier Segmentspulen 305. Die einzelnen Segmentspule 305 sind als Flachspulen ausgebildet und reihen sich rings um den Magnetkörper 303 aneinander. Wie sich aus Fig. 12 auch besonders deutlich ergibt, verlaufen bei jeder einzelnen Segmentspule 305 in den kozaxial zueinander angeordneten Spulenabschnitten 305a und 305b die Stromrichtungen in entgegengesetzter Richtung. Dadurch wirken die in den einzelnen Spulenteilen 305a und 305b fließenden Ströme in entgegengesetzten Richtungen auf das Magnetfeld. Dies kann eine Schwächung der Stellkraft herbeiführen. Um diesen Nachteil soweit wie möglich zu kompensieren, sind die äußeren Spulenabschnitte 305b so weit wie möglich von den inneren Spulenabschnitten 305a weggerückt.

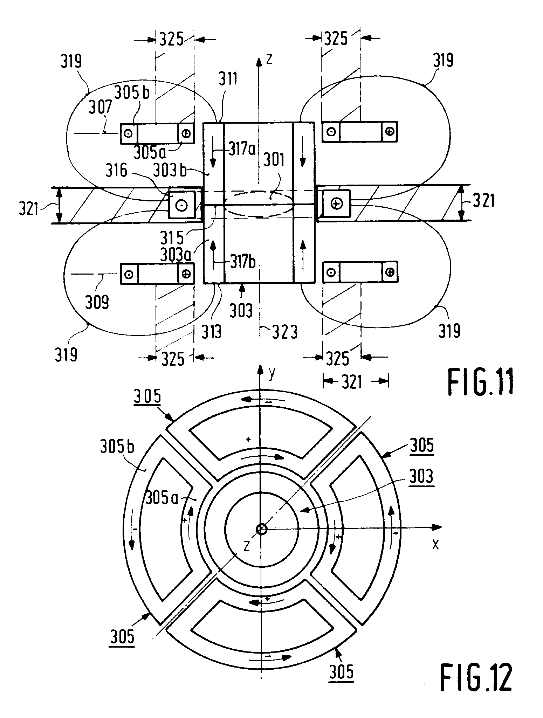

Fig. 11 zeigt die Anordnung der optischen Abtasteinheit nach Fig. 10 noch einmal in schaubildlicher Darstellung. Die Segmentspulen 305 befinden sich dabie, wie in Fig. 10, im Bereich der axialen Enden 311 und 313, und die Ringspule 116 befindet sich im Bereich der Mitte 315 des Magnetkörpers 303.

Während die axiale Länge des ringförmigen Magnetkörpers 303 in Fig. 10 relativ gering ist, ist ihre Länge in den Fig. 11 und 12 grösser dargestellt. Dieser Unterschied ist aber nur wegen der besseren Übersichtlichkeit gewählt worden. An sich ist der Magnetkörper axial relativ kurz (z.B ca. 5 bis 6 mm) und ist dementsprechend die optische Abtasteinheit sehr flach, so daß sie insbesondere in flache Geräte gut einbringbar ist. Alle Spulen der einzelnen Radialebenen können beispielsweise als flächenhafte Leitungszüge auf Schaltungsplatten angeordnet sein.

Die optische Abtasteinheit nach den fig. 10 bis 12 wirkt als fünfachs-Aktuator. Längs der Z-Achse ist der Magnetkörper 303 mittels der Ringspule 316 axial verstellbar. Abgesehen von geringeren, auch axial wirkenden Stellkomponenten der Segmentspulen 305 wirken diese radial verstellend in Richtung der Achsen X und Y auf den Magnetkörper 303. Werden die Segmentspulen der einzelnen Sätze an den axialen Enden unterschiedlich angesteuert, dann lassen sich außer diesen drei Bewegungsrichtungen noch zwei Drehbewegungen, und zwar eine um die X-Achse und eine um die Y-Achse verwirklichen. Diese fünf Verstellmöglichkeiten reichen absolut aus, um den schwimmend gelagerten Magnetkörper 303 in alle gewünschten Lagen zu verstellen, in denen eine einwandfreie Abtastung eines Informationsträgers bzw. ein einwandfreies Einschrieben in einen Informationsträger möglich ist.

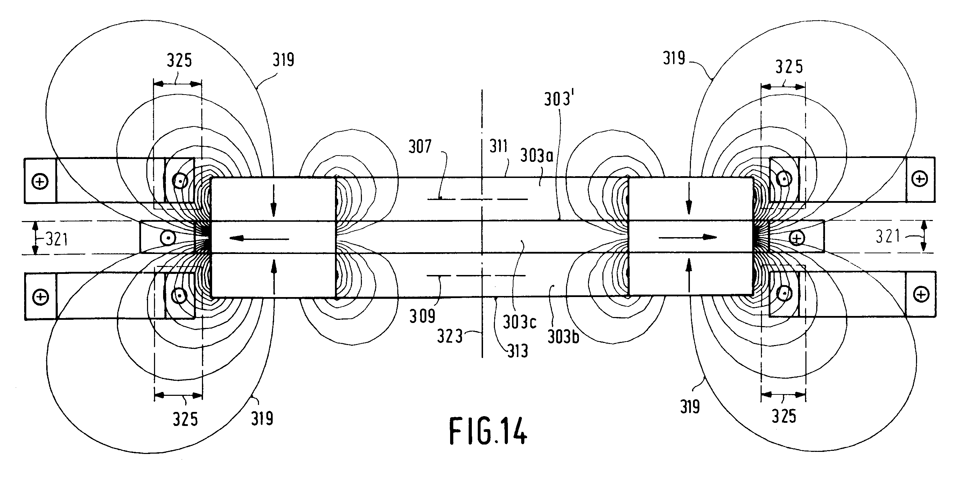

Die beiden Teilringe 303a und 303b des Magnetkörpers 303' (Fig. 14) müssen nicht unmittelbar aufeinander stoßen. Es kann zur Verbesserung der Feldkonfiguration im Bereich der radialen Zone zweckmäßig sein, zwischen den dauermagnetischen Ringen einen Zwischenring 303c anzuordnen, der aus magnetisch weichem oder unmagnetischem Material bestehen kann. Besteht der Zwischenring 303c aus dauermagnetischem Material, dann is er vorzugsweise radial magnetisiert. Die Richtugn der Magnetisierung des gesamten Magnetkörpers 303' ist dabei so gewählt, daß die magnetischen Nordpole der Teilringe 303a und 303b zur Zwischenring 303c und die magnetischen Nordpole des Zwischenringes 303c zur Hülsenaußenwand 327 gerichtet sind.

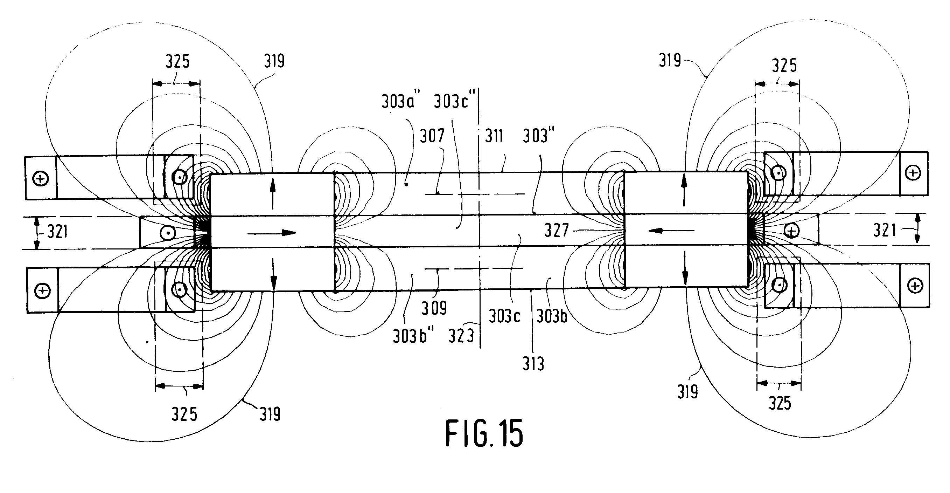

Bei einer anderen Ausführungsform des Magnetkörpers 303'' (Fig. 15) ist wieder ein Zwischenring 303c'' vorgesehen. Die Teilringe 303a'' und 303b'' sind dabei derart magnetisiert, daß ihre magnetischen Nordpole an den äußeren axialen Enden 311, 313 vorgesehen sind, während die magnetischen Nordpole des Zwischenringes 303c'' zur ihrer Innenwand 327 hin gerichtet sind. Auf die Weise lassen sich die Stelleigenschaften in der einen oder anderen Achse oder auch in zwei Achsen bevorzugen. So kann man gewünschte Eigenschaften (beispielsweise den Arbeitsbereich) verbessern und parasitäre Eigenschaften reduzieren.

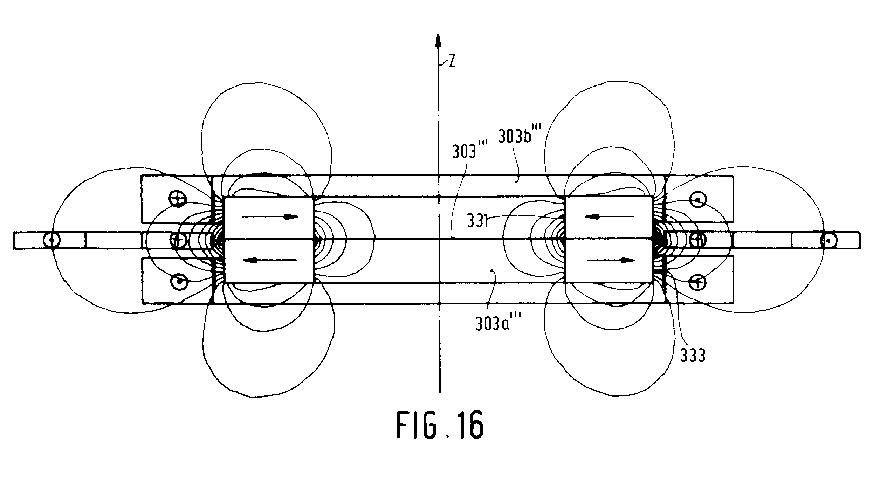

Bei der Darstellung nach Fig. 16 besteht der Magnetkörper 303''' aus zwei axial aufeinander gesetzten Teilringen 303a''' und 303b'''. Die Teilringe 303a'''und 303b''' sind in entgegengesetzen Richtungen radial magnetisiert. Die Nordpole des oberen, zur nicht dargestellten Informationsträgerplatte gelegenen Teilringes 303b''' liegen dabei ander Innenwand 331 dieses Teilringes 303b''' und die Nordpole des unteren Teilringes 303a''' liegen an der Außenwand 333 dieses Teilringes.

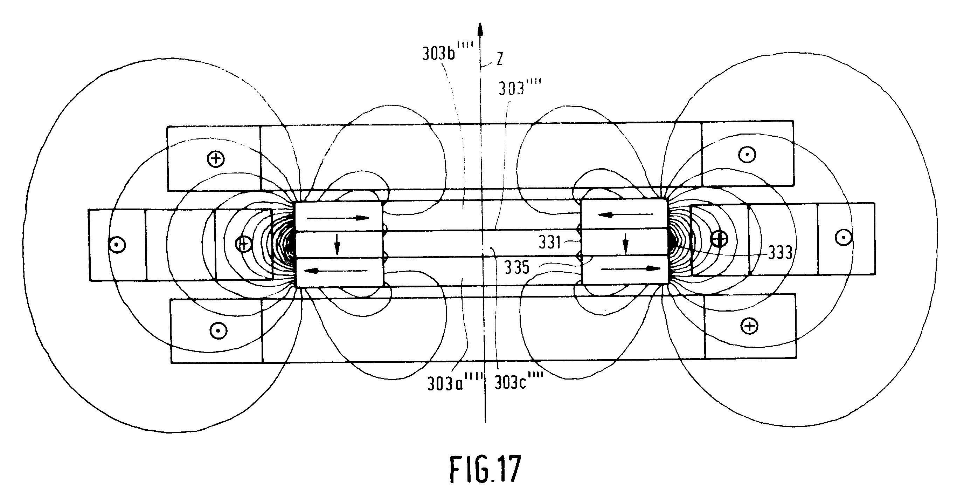

Bei der Darstellung nach Fig. 17 ist zwischen die Teilringe 303a'''' und 303b'''' der dauermagnetischen Hülse 303'''' noch einen Zwichenringe 303c'''' gefügt, der axial magnetisiert ist geht man davon aus, daß sich die Informationsplatte oberhalb der Hülse 303'''' befindet, dann ist der obere Teilring 303b'''' radial zur Innenwand 331 (Nord-Pole an der Innenwand 331) und der untere Teilring 303a'''' zur Außenwand 333 magnetisiert (Nord-Pole an der Außenwand 333). Die Nord-pole des axial magnetisierten Zwischenringes 303c'''' liegen dann an den von der Informationsträgerplatte abgewandten Ende 335 dieses Zwischenringes 303c''''. Eine Umkehrung dieser Magnetisierungsweise ist bei Bedarf möglich.

## Patentansprüche

1. Optische Abtasteinheit zum Steuern und Richten eines Strahlungsbündels auf Aufzeichnungsspuren einer abzutastenden Oberfläche eines Informationsträgers, wobei die Abtasteinheit ein Objektiv (5) mit einer optischen Achse aufweist, das mit einer Objektivlinse zum Fokussieren des Strahlungsbündels zu einem Abtastfleck auf der genannten Oberfläche versehen ist, wobei die Abtasteinheit weiterhin eine elektromagnetische Antriebsvorrichtung zum ständigen Korrigieren der Lage des Objektivs gegenüber dem Informationsträger aufweist, wobei die Antriebsvorrichtung mit einer Objektivhalterung für das Objektiv versehen ist, wobei diese Objektivhalterung einen koaxial zu der optischen Achse angeordneten, beweglichen ringförmigen Magnetkörper (200) aus dauermagnetischem Material aufweist, der an seinen axialen Enden mit Magnetpolen versehen ist, und wobei die Antriebsvorrichtung weiterhin mit ortsfesten Segmentspulen (204, 205) versehen ist, wovon jeweils mindestens drei im Bereich der axialen Enden des in der Mittellage befindlichen Magnetkörpers in äußeren Radialebenen liegen und die mittels eines aktiven, dem Magnetkörper zugewandten Teils über einen Luftspalt mit dem genannten Magnetkörper magnetisch zusammenarbeiten, dadurch gekennzeichnet, daß zusätzlich in wenigstens einer mittleren Radialebene mindestens drei Segmentspulen (206) angeordnet sind, die aus je einem dem Magnetkörper (200) zugewandten, in der Umfangsrichtung des Magnetkörpers sich erstreckenden aktiven Spulenteil (206a) und einem weiter von dem Magnetkörper abliegenden Spulenteil bestehen, wobei die Segmentspulen, in der Umfangsrichtung des Magnetkörpers gesehen, aneinander anschließen, so daß eine im wesentlichen radiale Bewegung bewirkbar ist.

2. Optische Abtasteinheit nach Anspruch 1, dadurch gekennzeichnet, daß die axiale Abmessung der Segmentspulen in der mittleren Radialebene größer ist als die axiale Abmessung der Segmentspulen in den Randzonen.

3. Optische Abtasteinheit zum Steuern und Richten eines Strahlungsbündels auf Aufzeichnungsspuren einer abzutastenden Oberfläche eines Informationsträgers, wobei die Abtasteinheit ein Objektiv (5) mit einer optischen Achse aufweist, das mit einer Objektivlinse zum Fokussieren des Strahlungsbündels zu einem Abtastfleck auf der genannten Oberfläche versehen ist, wobei die Abtasteinheit weiterhin eine elektromagnetische Antriebsvorrichtung zum ständigen Korrigieren der Lage des Objektivs gegenüber dem Informationsträger aufweist, wobei die Antriebsvorrichtung mit einer Objektivhalterung für das Objektiv versehen ist, wobei diese Objektivhalterung einen koaxial zu der optischen Achse angeordneten, beweglichen ringförmigen Magnetkörper (200) aus dauermagnetischem Material aufweist, der an seinen axialen Enden mit Magnetpolen versehen ist, und wobei die Antriebsvorrichtung weiterhin mit ortsfesten Spulen versehen ist, die im Bereich der axialen Enden des in der Mittellage befindlichen Magnetkörpers in äußeren Radialebenen liegen und die über einen Luftspalt mit dem genannten Magnetkörper magnetisch zusammenarbeiten, dadurch gekennzeichnet, daß die Spulen in jeder der äußeren Radialebenen als sich koaxial um den genannten Magnetkörper erstreckende Ringspule (604, 605; 804, 805) ausgebildet ist, so daß eine aximale Bewegung bewirkbar ist, und daß in wenigstens einer mittleren Radialebene mindestens drei Segmentspulen (606; 806) vorhanden sind, wobei die Segmentspulen, in der Umfangsrichtung des Magnetkörpers gesehen, aneinander anschließen und mit jeweils einem aktiven Teil in dieser Radialebene derart wirksam sind, daß eine im wesentlichen radiale Bewegung bewirkbar ist.

4. Optische Abtasteinheit nach Anspruch 3, dadurch gekennzeichnet, daß die genannten Segmentspulen aus je einem gegenüber dem Magnetkörper liegenden, in der Umfangsrichtung des Magnetkörpers sich erstreckenden aktiven Spulenteil und einem weiter von dem Magnetkörper abliegenden Spulenteil bestehen.

5. Optische Abtasteinheit nach Anspruch 3, dadurch gekennzeichnet, daß die Segmentspulen (806) als Spulensätze gebildet sind, wobei die Sätze, in axialer Richtung des Magnetkörpers gesehen, nebeneinander liegen, und daß die einzelnen Spulen der Spulensätze je zwei parallele, in Umfangsrichtung des Magnetkörpers erstreckende aktive Spulenteile (806a, 806b) aufweisen, wobei einer dieser aktiven Spulenteile (806a) radial neben dem Magnetkörper liegt und durch zu dem Magnetkörper hin abgewinkelte weitere Spulenteile mit einem anderen aktiven Spulenteil (806b) verbunden ist, wobei dieser sich gegenüber der Stirnseite des ihm zugeordneten Magnetpols des Magnetkörpers befindet.

6. Optische Abtasteinheit nach den Ansprüchen 3 und 5, dadurch gekennzeichnet, daß die genannten Ringspulen (804, 805) eine Anzahl von nach außen vorstehenden Vorsprüngen (804a, 805a) aufweisen, durch welche sich die weiteren Spulenteile der Segmentspulen erstrecken.

7. Optische Abtasteinheit zum Steuern und Richten eines Strahlungsbündels auf Aufzeichnungsspuren einer abzutastenden Oberfläche eines Informationsträgers, wobei die Abtasteinheit ein Objektiv (301) mit einer optischen Achse aufweist, das mit einer Objektivlinse zum Fokussieren des Strahlungsbündels zu einem Abtastfleck auf der genannten Oberfläche versehen ist, wobei die Abtasteinheit weiterhin eine elektromagnetische Antriebsvorrichtung zum ständigen Korrigieren der Lage des Objektivs (301) gegenüber dem Informationsträger aufweist, wobei die Antriebsvorrichtung mit einer Objektivhalterung für das Objektiv (301) versehen ist, wobei diese Objektivhalterung einen koaxial zu der optischen Achse (323) angeordneten, beweglichen ringförmigen Magnetkörper (303) aus dauermagnetischem Material aufweist, der mit Magnetpolen versehen ist, und wobei die Antriebsvorrichtung weiterhin mit ortsfesten Spulen (305) versehen ist, die im Bereich der axialen Enden des in der Mittellage befindlichen Magnetkörpers (303) in äußeren Radialebenen liegen und die Mittels einer aktiven dem Magnetkörper zugewandten teils (305a) über einen Luftspalt mit dem genannten Magnetkörper (303) magnetisch zusammenarbeiten, wobei in den äußeren Radialebenen jeweils mindestens drei Segmentspulen (305) angeordnet sind und wobei der Magnetkörper (303) aus zwei einander entgegen magnetisierten, axial aufeinander gesetzten Ringteilen (303a, 303b) besteht, dadurch gekennzeichnet, daß der ringförmige Magnetkörper (303) in wenigstens einer mittleren Radialebene von einer Ringspule (316) umschlossen ist.

8. Optische Abtasteinheit nach Anspruch 7, dadurch gekennzeichnet, daß der Magnetkörper (303) aus zwei Teilringen (303a, 303b) besteht, zwischen die ein Zwischenring (303c) gefügt ist.

9. Optische Abtasteinheit nach Anspruch 8, dadurch gekennzeichnet, daß der Zwischenring (303c) aus magnetisch weichem Material besteht.

10. Optische Abtasteinheit nach Anspruch 8, dadurch gekennzeichnet, daß der Zwischenring (303c) aus unmagnetischem Material besteht.

11. Optische Abtasteinheit nach Anspruch 8, dadurch gekennzeichnet, daß der Zwischenring (303c) aus dauermagnetischem Material besteht und radial magnetisiert ist.

12. Optische Abtasteinheit nach den Ansprüchen 7, 8 und 11, dadurch gekennzeichnet, daß der Magnetkörper (303') insgesamt derart magnetisiert ist, daß die Nordpole der Teilringe (303a, 303b) an dem Zwischenring und die Nordpole des Zwischenringes (303c) an deren Außenwand (333) vorgesehen sind (Fig. 14).

13. Optische Abtasteinheit nach den Ansprüchen 7, 8 und 11, dadurch gekennzeichnet, daß der Magnetkörper (303") insgesamt derart magnetisiert ist, daß die Nordpole der Teilringe (303a", 303b") an den äußeren axialen Enden und die Nordpole der Zwischenringe (303c") an deren Innenwand (331) vorgesehen sind (Fig. 15).

14. Optische Abtasteinheit nach Anspruch 7, dadurch gekennzeichnet, daß die Spulen (305, 316) in den einzelnen Radialebenen als flächenhafte Leitungszüge auf Schaltungsplatten angeordnet sind (Fig. 13).

15. Optische Abtasteinheit nach Anspruch 3, dadurch gekennzeichnet, daß der Magnetkörper (303''') aus zwei Teilringen (303a''', 303b''') besteht, die in entgegengesetzten Richtungen radial magnetisiert sind (Fig. 16).

16. Optische Abtasteinheit nach Anspruch 15, dadurch gekennzeichnet, daß zwischen den Teilringen (303a''', 303b''') ein Zwischenring (303c''') angeordnet ist, der axial magnetisiert ist (Fig. 17).

17. Optische Abtasteinheit nach Anspruch 16, dadurch gekennzeichnet, daß der zur auszulesenden Informationsträgerplatte hin gelegene Teilring (303b''') radial nach innen (Nordpole innen) und die anderen Teilringe radial nach außen (Nordpole außen) magnetisiert sind, während der Zwischenring (303c''') axial von der Informationsträgerplatte weg (Nordpole von der Platte weg) magnetisiert ist (Fig. 17).

## Claims

1. An optical scanning unit for controlling and directing a radiation beam relative to recording tracks of an information-carrier surface to be scanned, the scanning unit comprising an objective (5) with an optical axis, which objective comprises an objective lens for focussing the radiation beam to form a scanning spot on said surface, the scanning unit further comprising an electromagnetic actuating device for continually correcting the position of the objective relative to the information carrier, which actuating device comprises an objective holder for the objective, which objective holder comprises a movable annular magnetic body (200) of a permanent-magnetic material, which body is arranged coaxially with the optical axis and has magnetic poles at axially opposed sides, said actuating device further comprising stationary segmental coils (204, 205), of which at least three coils at each axial side of the magnetic body are disposed in outer radial planes when said body is in the central position, and which coils cooperate magnetically with said magnetic body via an air gap by means of an active part facing the magnetic body, characterized in that, in addition, at least three segmental coils (206) are arranged in at least one central radial plane and each comprise an active coil part (206a) facing the magnetic body (200) and extending in the circumferential direction of the magnetic body and a coil part situated further away from the magnetic body, the segmental coils adjoining one another viewed in the circumferential direction of the magnetic body so as to enable a substantially radial movement to be realised.

2. An optical scanning unit as claimed in Claim 1, characterized in that the axial dimensions of the segmental coils in the central radial plane are larger than the axial dimensions of the segmental coils in the peripheral zones.

3. An optical scanning unit for controlling and directing a radiation beam relative to recording tracks of an information-carrier surface to be scanned, the scanning unit comprising an objective (5) with an optical axis, which objective comprises an objective lens for focussing the radiation beam to form a scanning spot on said surface, the scanning unit further comprising an electromagnetic actuating device for continually correcting the position of the objective relative to the information carrier, which actuating device comprises an objective holder for the objective, which objective holder comprises a movable annular magnetic body (200) of a permanent-magnetic material, which body is arranged coaxially with the optical axis and has magnetic poles at axially opposed sides, said actuating device further comprising stationary coils which are disposed in outer radial planes at the axial sides of the magnetic body in the central position of said body and which cooperate magnetically with said magnetic body via an air gap, characterized in that the coils in each of the outer radial planes take the form of annular coils (604, 605; 804, 805) extending coaxially around said magnetic body so as to enable a maximal excursion to be realised, and in that in at least one central radial plane at least three segmental coils (606; 806) are present, the segmental coils adjoining one another viewed in the circumferential direction of the magnetic body and each being active in said radial plane so as to enable a substantially radial movement to be realised.

4. An optical scanning unit as claimed in Claim 3, characterized in that said segmental coils each comprise an active coil part facing the magnetic body and extending in the circumferential direction of the magnetic body and a coil part situated further away from the magnetic body.

5. An optical scanning unit as claimed in Claim 3, characterized in that the segmental coils (806) are constructed as coil sets, the sets being juxtaposed viewed in the axial direction of the magnetic body, and in that the individual coils of the coil sets comprise active coil parts (806a, 806b) which extend in the circumferential direction of the magnetic body, one of said active coil parts (806a) being situated radially adjacent to the magnetic body and being connected to another active coil part (806b) by further coil parts which are inclined towards the magnetic body, said active coil part facing the associated magnetic pole of the magnetic body.

6. An optical scanning unit as claimed in Claims 3 and 5, characterized in that said annular coils (804, 805) comprise a plurality of outwardly projecting portions (804a, 805a) through which the further coil parts of the segmental coils extend.

7. An optical scanning unit for controlling and directing a radiation beam relative to recording tracks of an information-carrier surface to be scanned, the scanning unit comprising an objective (301) with an optical axis, which objective comprises an objective lens for focussing the radiation beam to form a scanning spot on said surface, the scanning unit further comprising an electromagnetic actuating device for continually correcting the position of the objective (301) relative to the information carrier, which actuating device comprises an objective holder for the objective (301), which objective holder comprises a movable annular magnetic body (303) of a permanent-magnetic material, which body is arranged coaxially with the optical axis (303) and has magnetic poles, said actuating device further comprising stationary coils (305) which are disposed in outer radial planes at the axial sides of the magnetic body (303) in the central position of said body, and which cooperate magnetically with said magnetic body (303) via an air gap by means of an active part (305a) facing the magnetic body, at least three segmental coils (305) being arranged in the outer radial planes and the magnet body (303) comprising two oppositely magnetized axially stacked annular members (303a, 303b), characterized in that the annular magnetic body (303) is surrounded by an annular coil (316) in at least one central radial plane.

8. An optical scanning unit as claimed in Claim 7, characterized in that the magnetic body (303) comprises two annular members (303a, 303b) between which an intermediate ring (303c) is interposed.

9. An optical scanning unit as claimed in Claim 8, characterized in that the intermediate ring (303c) is made of a soft-magnetic material.

10. An optical scanning unit as claimed in Claim 8, characterized in that the intermediate ring (303c) is made of a non-magnetic material.

11. An optical scanning unit as claimed in Claim 8, characterized in that the intermediate ring (303c) is made of a permanent-magnetic material and is radially magnetized.

12. An optical scanning unit as claimed in Claims 7, 8 and 11, characterized in that the magnetic body (303') as a whole is magnetized in such a manner that the north poles of the annular members (303a, 303b) face the intermediate ring and the north poles of the intermediate ring (303c) are situated at its periphery (333) (Fig. 14).

13. An optical scanning unit as claimed in Claims 7, 8 and 11, characterized in that the magnetic body (303") as a whole is magnetized in such a manner that the north poles of the annular members (303a", 303b") are situated at the outer axial sides and the north poles of the intermediate rings (303c")are situated at its inner wall (331) (Fig. 15).

14. An optical scanning unit as claimed in Claim 7, characterized in that the coils (305, 316) are arranged in the individual radial planes as flat conductor patterns on printed circuit boards (Fig. 13).

15. An optical scanning unit as claimed in Claim 3, characterized in that the magnetic body (303''') comprises two annular members (303a''', 303b''') which are radially magnetized in opposite directions (Fig. 16).

16. An optical scanning unit as claimed in Claim 15, characterized in that an axially magnetized intermediate ring (303c''') is interposed between the annular members (303a''', 303b''') (Fig. 17).

17. An optical scanning unit as claimed in Claim 16, characterized in that the annular member (303b''') which faces the information-carrying disc to be read is magnetized radially inwardly (north pole at the inside) and the other annular members are magnetized radially outwardly (north poles at the outside), the intermediate ring (303c''') being axially magnetized at the side which is remote from the information-carrying disc (north poles remote from the disc) (Fig. 17).

**Revendications**

1. Unité de balayage optique destinée à piloter et orienter un faisceau de rayonnement sur des pistes d'enregistrement d'une surface à balayer d'un support d'information, l'unité de balayage comportant un objectif (5) à axe optique qui est pourvu d'une lentille d'objectif pour focaliser le faisceau de rayonnement en un spot de balayage sur ladite surface, l'unité de balayage comprenant, en outre, un dispositif d'entraînement électromagnétique pour corriger de manière continue la position de l'objectif par rapport au support d'information, le dispositif d'entraînement étant pourvu d'une monture d'objectif pour l'objectif, cette monture d'objectif comportant un corps magnétique annulaire (200) mobile, en matière magnétique permanente, disposé coaxialement à l'axe optique, qui est pourvu de pôles magnétiques à ses extrémités axiales et le dispositif d'entraînement étant pourvu, en outre, de bobines segmentaires fixes (204, 205), dont trois au moins sont disposées dans des plans radiaux extérieurs dans la zone des extrémités axiales du corps magnétique se trouvant en position médiane et qui par une partie active tournée vers le corps magnétique coopèrent magnétiquement avec ledit corps magnétique par l'intermédiaire d'un entrefer, caractérisée en ce qu'en outre, dans au moins un plan radial médian, sont disposées au moins trois bobines segmentaires (206) qui sont chacune formées d'une partie de bobine active (206a) tournée vers le corps magnétique (200) et s'étendant dans la direction circonférentielle de ce dernier, et d'une partie de bobine davantage espacée du corps magnétique, les bobines segmentaires, vues dans le sens circonférentiel du corps magnétique, étant juxtaposées l'une à l'autre, de sorte qu'un mouvement essentiellement radial peut être effectué.

2. Unité de balayage optique suivant la revendication 1, caractérisée en ce que les dimensions axiales des bobines segmentaires, dans le plan radial médian, sont supérieures aux dimensions axiales de ces bobines segmentaires dans les zones marginales.

3. Unité de balayage optique destinée à piloter et à orienter un faisceau de rayonnement sur des pistes d'enregistrement d'une surface à balayer d'un support d'information, l'unité de balayage comportant un objectif (5) à axe optique, qui est pourvu d'une lentille d'objectif pour focaliser le faisceau de rayonnement en un spot de balayage sur ladite surface, l'unité de balayage comprenant, en outre, un dispositif d'entraînement électromagnétique pour corriger de manière continue la position de l'objectif par rapport au support d'information, le dispositif d'entraînement étant pourvu d'une monture d'objectif pour l'objectif, cette monture d'objectif comportant un corps magnétique annulaire (200) mobile, en matière magnétique permanente, disposé coaxialement à l'axe optique, qui est pourvu de pôles magnétiques à ses extrémités axiales, et le dispositif d'entraînement étant pourvu, en outre, de bobines fixes qui sont disposées dans des plans radiaux extérieurs, dans la zone des extrémités axiales du corps magnétique se trouvant en position médiane, et qui coopèrent magnétiquement avec ledit corps magnétique par l'intermédiaire d'un entrefer, caractérisée en ce que les bobines, dans chacun des plans radiaux extérieurs, ont la forme de bobines annulaires (604, 605; 804, 805) s'étendant coaxialement autour dudit corps magnétique, de sorte qu'un déplacement maximum peut être réalisé, et que, dans au moins un plan radial médian, au moins trois bobines segmentaires (606; 806) sont présentes, ces bobines segmentaires, vues dans le sens circonférentiel du corps magnétique, étant juxtaposées l'une à l'autre et agissant chacune par une partie active dans ce plan radial, de sorte qu'un déplacement essentiellement radial peut être réalisé.

4. Unité de balayage optique suivant la revendication 3, caractérisée en ce que lesdites bobines segmentaires sont formées chacune d'une partie de bobine active disposée en face du corps magnétique et s'étendant dans le sens circonférentiel de ce corps magnétique et d'une partie de bobine davantage espacée du corps magnétique.

5. Unité de balayage optique suivant la revendication 3, caractérisée en ce que les bobines segmentaires (806) ont la forme de jeux de bobines qui, vus dans le sens axial du corps magnétique, sont disposés l'un à côté de l'autre, et que les bobines individuelles des jeux de bobines comportent chacune deux parties de bobine active parallèles (806a, 806b) s'étendant dans le sens circonférentiel du corps magnétique, une de ces parties de bobine active (806a) étant disposée radialement à côté du corps magnétique et étant reliée, par d'autres parties de bobines coudées vers le corps magnétique, à une autre partie de bobine active (806b), cette dernière se trouvant en regard de la face d'about du pôle magnétique du corps magnétique qui lui est associe.

6. Unité de balayage optique suivant les revendications 3 et 5, caractérisée en ce que lesdites bobines annulaires (804, 805) présentent un certain nombre de saillies (804a, 805a) s'étendant vers l'extérieur, à travers lesquelles s'étendent les autres parties de bobines des bobines segmentaires.

7. Unité de balayage optique destinée à piloter et à orienter un faisceau de rayonnement sur des pistes d'enregistrement d'une surface à balayer d'un support d'information, l'unité de balayage comportant un objectif (301) à axe optique qui est pourvu d'une lentille d'objectif pour focaliser le faisceau de rayonnement en un spot de balayage sur ladite surface, l'unité de balayage comprenant, en outre, un dispositif d'entraînement électromagnétique pour corriger de manière continue la position de l'objectif (301) par rapport au support d'information, le dispositif d'entraînement étant pourvu d'une monture d'objectif pour l'objectif (301), cette monture d'objectif comportant un corps magnétique annulaire (303) mobile en matière magnétique permanente, disposé coaxialement à l'axe optique (323), qui est pourvu de pôles magnétiques, et le dispositif d'entraînement étant pourvu, en outre, de bobines fixes (305) qui sont disposées dans des plans radiaux extérieurs dans la zone des extrémités axiales du corps magnétique (303) se trouvant en position médiane et qui, au moyen d'une partie active (305a) tournée vers le corps magnétique, coopèrent magnétiquement avec ledit corps magnétique (303) par l'intermédiaire d'un entrefer, étant entendu que dans chacun des plans radiaux extérieurs sont disposées au moins trois bobines segmentaires (305) et que le corps magnétique (303) est constitué de deux parties annulaires (303a, 303b) superposées axialement et magnétisées en opposition, caractérisée en ce que le corps magnétique annulaire (303) est entouré par une bobine annulaire (316) au moins dans un plan radial médian.

8. Unité de balayage optique suivant la revendication 7, caractérisée en ce que le corps magnétique (303) est constitué de deux anneaux partiels (303a, 303b) entre lesquels est inséré un anneau intermédiaire (303c).

9. Unité de balayage optique suivant la revendication 8, caractérisée en ce que l'anneau intermédiaire (303c) est en matière magnétique douce.

10. Unité de balayage optique suivant la revendication 8, caractérisée en ce que l'anneau intermédiaire (303c) est en matière non magnétique.

11. Unité de balayage optique suivant la revendication 8, caractérisée en ce que l'anneau intermédiaire (303c) est en matière magnétique permanente et est aimanté radialement.

12. Unité de balayage optique suivant les revendications 7, 8 et 11, caractérisée en ce que le corps magnétique (303') est dans l'ensemble aimanté de telle façon que les pôles Nord des anneaux partiels (303a, 303b) soient prévus sur l'anneau intermédiaire et que les pôles Nord de l'anneau intermédiaire (303c) soient prévus sur la paroi extérieure (333) (Fig. 14).

13. Unité de balayage optique suivant les revendications 7, 8 et 11, caractérisée en ce que le corps magnétique (303'') est aimanté dans son ensemble de telle façon que les pôles Nord des anneaux partiels (303a'', 303b'') soient prévus sur les extrémités axiales externes et que les pôles Nord des anneaux intermédiaires (303c'') soient prévus sur la paroi intérieure (331) (Fig. 15).

14. Unité de balayage optique suivant la revendication 7, caractérisée en ce que les bobines (305, 316), dans les plans radiaux individuels, sont montées en tant que brins conducteurs plats sur des plaquettes à circuits imprimés (Fig. 13).

15. Unité de balayage optique suivant la revendication 3, caractérisée en ce que le corps magnétique (303''') est formé de deux anneaux partiels (303a''', 303b''') qui sont aimantés radialement en sens opposés (Fig. 16).

16. Unité de balayage optique suivant la revendication 15, caractérisée en ce qu'entre les anneaux partiels (303a''', 303b''') est disposé un anneau intermédiaire (303c''') qui est aimanté axialement (Fig. 17).

17. Unité de balayage optique suivant la revendication 16, caractérisée en ce que l'anneau partiel (303b''') proche du disque de support d'information à lire est aimanté radialement vers l'intérieur (pôles Nord intérieurs) et les autres anneaux partiels sont aimantés radialement vers l'extérieur (pôles Nord extérieurs), tandis que l'anneau intermédiaire (303c''') est aimanté axialement dans un sens s'éloignant du disque de support d'information (pôles Nord éloignés du disque) (Fig. 17).

FIG.1

FIG. 2

FIG.3

FIG.4

FIG.7

FIG.9

FIG.5

FIG.6

5

202

200

β

y z x α

804a

804

806

805

805a

208

FIG.8

FIG.10

FIG.11

FIG.12

FIG.13

FIG.14

FIG.15

FIG.16

FIG.17

EP 0 215 498 B1